# EUROPEAN PATENT SPECIFICATION

(11) **EP 2 920 866 B1**
(45) Date of publication and mention of the grant of the patent: **18.05.2022**
(21) Application number: 12888248.7
(22) Date of filing: 16.11.2012
(51) Int. Cl.: H02K 5/06, H02K 5/22, H02K 5/20, H02K 5/24

(54) **CAST HOUSING FOR LARGE ELECTRIC MOTOR WITH REINFORCEMENT COMPONENTS**
GUSSGEHÄUSE FÜR GROSSE ELEKTROMOTOREN MIT VERSTÄRKUNGSKOMPONENTEN
BOÎTIER MOULÉ POUR UN GRAND MOTEUR ÉLECTRIQUE AVEC DES COMPOSANTS DE RENFORCEMENT

(43) Date of publication of application: 23.09.2015
(73) Proprietor: Siemens Aktiengesellschaft, 80333 München (DE)
(72) Inventor: GAO, Haijun, Tianjin 300143 (CN); WU, Yuhong, Tianjin 300402 (CN); YI, Litao, Tianjin 300131 (CN)
(74) Representative: Isarpatent
(86) International application number: PCT/CN2012/084720
(87) International publication number: WO 2014/075281

(56) References cited:
- EP-A2- 0 751 604
- EP-A2- 1 751 471
- CN-U- 201 999 978
- CN-Y- 201 349 155
- CN-Y- 201 414 035
- DE-A1- 3 506 628
- US-A1- 2012 206 022

## Description

### FIELD OF THE INVENTION

The present invention relates to cast housing for large electric motor, and more particularly to cast housing for large electric motor having reinforcement components connected to, thereby reinforcing the strength of such cast housing for large electric motor.

### BACKGROUND OF THE INVENTION

EP 0 751 604 A2 discloses a stator for a dynamoelectric machine comprising a stator frame including a main frame and a plurality of axial ribs which are enclosed in the main frame to be cylindrically arranged and to extend axially of the machine such that a space is defined by the ribs, and a stator core formed of a lamination of steel sheets and fitted in the space defined by the axial ribs to be held in position.

CN 201 349 155 Y discloses a pig cast machine base with a square box mixed-flow structure. The pig cast machine base comprises a ventilation duct, a hoisting ring lug, a hidden casing, an auxiliary wire outlet hole, an octahedron, a main wire outlet hole, a grounding lug, a radial looped rib, a supporting heat radiation rib and a housing.

EP 1 751 471 A2 describes a fan apparatus comprising an outside case, a fan housing secured to an inside of the outside case, and a fan disposed within the fan housing. The outside case comprises axial air inlets and an air outlet disposed opposite to an air outlet of the fan housing on a peripheral portion of the outside case. The fan housing comprises a face plate which is mounted to a support bracket of the outside case.

US 2012/0206022 A1 describes an electric motor comprising end frames. The end frames are arranged on opposite sides of a stator housing. The end frames comprise a circular outer housing and a circular inner housing connected to each other by a rigid lattice.

In the prior art, a housing for a large electric motor is generally manufactured by casting with complicated structure including very thick wall so as to obtain reinforced housing, however it will increase the cost of manufacturing substantially. If welded steel housing is used, it may lead to expensive cost of material and manufacturing. Therefore, cast housing for large electric motor having reinforcement components connected to, thereby reinforcing such cast housing for large electric motor is urgently needed in this field.

### SUMMARY OF THE INVENTION

In order to overcome the disadvantages of current techniques, a cast housing for large electric motor with reinforcement components is provided in accordance with claim 1.

Those skilled in the art will appreciated that said opening portions may be any combination of shape or profile as defined above.

Reinforcement components are of welded steel reinforcement components, casting reinforcement components, or profiled bar.

The peripheral frame can be mounted in said ventilation opening by means of at least one of screw connection, pin connection, adhesive connection and shrink fit.

It is easy for disassembly and maintenance operations by mounting the peripheral frame of the reinforcement components is mounted in said ventilation opening via at least one of screw connection, pin connection, adhesive connection and shrink fit. Further, thanks to said reinforcement components mounted in said ventilation opening, deformation of ventilation opening resulted from vibration is reduced, hence the strength of said cast housing for large electric motor is significantly increased. With such reinforcement components having reinforcement structure mentioned above can accomplish cast housing of relatively thin wall and simple structure without reducing its strength, which saves cost of material and manufacturing.

There has thus been outlined, rather broadly, certain embodiments of the invention in order that the detailed description thereof herein may be better understood, and in order that the present contribution to the art may be better appreciated. There are, of course, additional embodiments of the invention that will be described below and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of embodiments in addition to those described and of practiced and carried out in various ways. Also, it is to be understood that the phraseology and terminology employed herein, as well as the abstract, are for the purpose of description and should not be regarded as limiting.

As such, those skilled in the art will appreciated that the conception upon which this disclosure is based may readily be utilized as a basis for the designing of other structures, methods and systems for carrying out the several purposes of the present invention. It is important, therefore, that the claims be regarded as including such equivalent constructions insofar as they do hot depart from the scope of the present invention as defined in the claims

### BRIEF DESCRIPTION OF THE DRAWINGS

The present invention will be better understood upon reading the following description with appended drawings and advantages of the present invention will become more apparent. The drawings described herein are intended for purposes of illustration only and not intended to limit the scope of the present disclosure.
Figure 1 illustrates cast housing for large electric motor with reinforcement components according embodiments of the invention.
Figures 2a, 2b show reinforcement components with various reinforcement structures according to embodiments of the present invention.

### DETAILED DESCRIPTION OF PREFERRED EMBODIMENTS

Preferred embodiments of the present invention will be explained with reference to the accompanying drawings below.

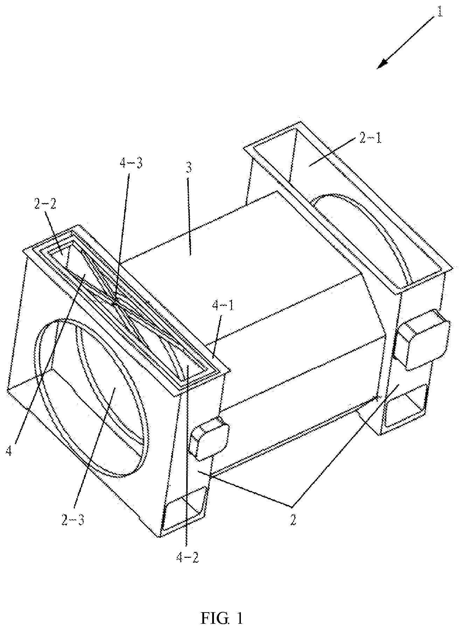

Figure 1 illustrates cast housing for large electric motor with reinforcement components according embodiments of the invention. A cast housing 1 for large electric motor with reinforcement components is provided, and wherein said cast housing 1 for large electric motor comprises two supporting sections 2 each having a cavity 2-1 wherein ventilation opening 2-2 is disposed, and a connecting section 3 connecting between said two supporting sections, the two supporting sections and connecting section have mounting through-holes 2-3 which are connected to each other, reinforcement components 4 with reinforcement structure are mounted in said ventilation opening 2-2 (for clarity reason, only one reinforcement component is shown in Figure 1).

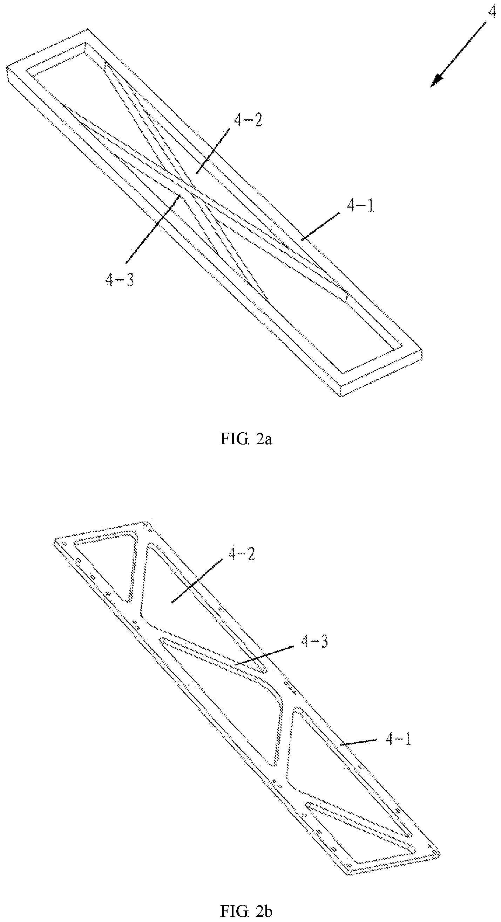

Figures 2a, 2b show reinforcement components provided with various reinforcement structures according to embodiments of the present invention.

As shown in Figures 2a, 2b, said reinforcement components 4 include a peripheral frame 4-1 forming a frame opening 4-2, and said frame opening 4-2 is divided into a plurality of opening portions by said reinforcement structure 4-3.

In the example of Figure 2b, said opening portions are triangular in shape.

According to the present invention, said opening portions can also be polygonal in shape, as shown in Figure 2a.

According to another aspect of the present invention, said opening portions may have curve profile (not shown).

Those skilled in the art will appreciated that said opening portions could be any combination of shape and profile as defined above. Reinforcement components are of welded steel reinforcement components, casting reinforcement components, or profiled bar.

The peripheral frame 4-1 can be mounted in said ventilation opening 2-2 by means of at least one of screw connection, pin connection, adhesive connection and shrink fit.

Those skilled in the art will appreciated that it is easy for mounting operation if the peripheral shape of said peripheral frame 4-1 of said reinforcement components can varies in accordance with the peripheral shape of ventilation opening 2-2.

With reference to the embodiments shown above, although this invention has demonstrated the most useful and selected embodiment which can be considered at present, it will be appreciated by those skilled in the art numerous variations, changes and substitutions may be made without departing from the invention scope defined by claims set herein. Moreover, those skilled in the art will also appreciate that the technical features, components and/or functions in one particular embodiment can be incorporated with another one if necessary based on the above disclosure which has been illustrated in a very clear way. In addition, according to teaching of this invention, various modifications can be made under some of particular scenario without departing from the scope of invention as defined in the claims. Therefore, it is appreciated that these details are just for schematic and the application is not limited to the embodiments disclosed.

## Claims

1. Cast housing (1) for large electric motor with reinforcement components (4),
wherein it comprises two supporting sections (2) each having a cavity (2-1) wherein a ventilation opening (2-2) is disposed; a connecting section (3) connecting between said two supporting sections (2); the two supporting sections (2) and the connecting section (3) have mounting through-holes (2-3) which are connected to each other; reinforcement components (4) with a reinforcement structure (4-3) mounted in said ventilation opening (2-2); **characterized in that** said reinforcement components (4) include a peripheral frame (4-1) which forms a frame opening (4-2) and said reinforcement structure, wherein said frame opening (4-2) is divided into a plurality of opening portions by the reinforcement structure (4-3), wherein said opening portions are triangular or polygonal in shape, or said opening portions have a curved profile.

2. Cast housing (1) for large electric motor according to claim 1, **characterized in that** said reinforcement components (4) are of welded steel reinforcement components (4).

3. Cast housing (1) for large electric motor according to claim 1, **characterized in that** said reinforcement components (4) are of casting reinforcement components (4).

4. Cast housing (1) for large electric motor according to claim 1, **characterized in that** said reinforcement components (4) are of profiled bar.

5. Cast housing (1) for large electric motor according to any one of claims 1-4, **characterized in that** said peripheral frame can be mounted in said ventilation opening (2-2) by means of at least one of screw connection, pin connection, adhesive connection and shrink fit.

## Patentansprüche

1. Gussgehäuse (1) für einen großen Elektromotor mit Verstärkungskomponenten (4), wobei es zwei tragende Abschnitte (2), die jeweils einen Hohlraum (2-1) aufweisen, in dem eine Belüftungsöffnung (2-2) angeordnet ist; einen Verbindungsabschnitt (3), der zwischen den zwei tragenden Abschnitten (2) verbindet; wobei die zwei tragenden Abschnitte (2) und der Verbindungsabschnitt (3) Montagedurchgangslöcher (2-3) aufweisen, die miteinander verbunden sind; Verstärkungskomponenten (4) mit einer Verstärkungsstruktur (4-3), die in der Belüftungsöffnung (2-2) montiert sind, umfasst; **dadurch gekennzeichnet, dass** die Verstärkungskomponenten (4) einen umlaufenden Rahmen (4-1) umfassen, der eine Rahmenöffnung (4-2) und die Verstärkungsstruktur ausbildet, wobei die Rahmenöffnung (4-2) durch die Verstärkungsstruktur (4-3) in eine Mehrzahl von Öffnungsbereichen unterteilt ist, wobei die Öffnungsbereiche eine dreieckige oder polygonale Form aufweisen oder die Öffnungsbereiche ein gebogenes Profil aufweisen.

2. Gussgehäuse (1) für einen großen Elektromotor nach Anspruch 1, **dadurch gekennzeichnet, dass** die Verstärkungskomponenten (4) aus geschweißten Stahlverstärkungskomponenten (4) sind.

3. Gussgehäuse (1) für einen großen Elektromotor nach Anspruch 1, **dadurch gekennzeichnet, dass** die Verstärkungskomponenten (4) aus gegossenen Verstärkungskomponenten (4) sind.

4. Gussgehäuse (1) für einen großen Elektromotor nach Anspruch 1, **dadurch gekennzeichnet, dass** die Verstärkungskomponenten (4) aus einem Profilstab sind.

5. Gussgehäuse (1) für einen großen Elektromotor nach einem der Ansprüche 1-4, **dadurch gekennzeichnet, dass** der umlaufende Rahmen in der Belüftungsöffnung (2-2) mittels mindestens einem einer Schraubverbindung, Stiftverbindung, Klebeverbindung und Schrumpfpassung montiert sein kann.

## Revendications

1. Boîtier moulé (1) pour un grand moteur électrique avec des composants de renforcement (4), dans lequel il comprend deux sections de support (2) ayant chacune une cavité (2-1) dans laquelle une ouverture de ventilation (2-2) est disposée ; une section de raccordement (3) se raccordant entre lesdites deux sections de support (2) ; les deux sections de support (2) et la section de raccordement (3) ont des trous traversants de montage (2-3) qui sont raccordés l'un à l'autre ; des composants de renforcement (4) avec une structure de renforcement (4-3) montée dans ladite ouverture de ventilation (2-2) ; **caractérisé en ce que** lesdits composants de renforcement (4) incluent un cadre périphérique (4-1) qui forme une ouverture de cadre (4-2) et ladite structure de renforcement, ladite ouverture de cadre (4-2) étant divisée en une pluralité de portions d'ouverture par la structure de renforcement (4-3), lesdites portions d'ouverture étant de forme triangulaire ou polygonale, ou lesdites portions d'ouverture ayant un profil incurvé.

2. Boîtier moulé (1) pour un grand moteur électrique selon la revendication 1, **caractérisé en ce que** lesdits composants de renforcement (4) sont des composants de renforcement (4) en acier soudé.

3. Boîtier moulé (1) pour un grand moteur électrique selon la revendication 1, **caractérisé en ce que** lesdits composants de renforcement (4) sont des composants de renforcement (4) par moulage.

4. Boîtier moulé (1) pour un grand moteur électrique selon la revendication 1, **caractérisé en ce que** lesdits composants de renforcement (4) sont en barre profilée.

5. Boîtier moulé (1) pour un grand moteur électrique selon l'une quelconque des revendications 1 à 4, **caractérisé en ce que** ledit cadre périphérique peut être monté dans ladite ouverture de ventilation (2-2) au moyen d'au moins un élément parmi un raccordement par vis, un raccordement par broche, un raccordement adhésif et un ajustage par contraction.
